# EUROPÄISCHE PATENTSCHRIFT

(11) **EP 2 348 695 B1**
(45) Veröffentlichungstag und Bekanntmachung des Hinweises auf die Patenterteilung: **08.02.2017**
(21) Anmeldenummer: 10197169.5
(22) Anmeldetag: 28.12.2010
(51) Int. Cl.: H04M 1/56, H04M 1/2745

(54) **ERFASSUNG EINER KENNUNG EINES KOMMUNIKATIONSTEILNEHMERS IN EINEM KOMMUNIKATIONSENDGERÄT**
RECORDING OF AN IDENTIFIER OF A COMMUNICATION PARTICIPANT IN A COMMUNICATION END DEVICE
DÉTECTION D'UN IDENTIFIANT D'UN PARTICIPANT À UNE COMMUNICATION DANS UN TERMINAL DE COMMUNICATION

(30) Priorität: 22.01.2010 DE 102010001162
(43) Veröffentlichungstag der Anmeldung: 27.07.2011
(73) Patentinhaber: Vodafone Holding GmbH, 40213 Düsseldorf (DE)
(72) Erfinder: Müller, Frank, 40237 Düsseldorf (DE)
(74) Vertreter: Jostarndt Patentanwalts-AG

(56) Entgegenhaltungen:
- US-A1- 2005 138 177
- US-B1- 7 010 116

## Beschreibung

Die Erfindung bezieht sich auf die Speicherung von Kennungen von Kommunikationspartnern in einem Kommunikationsendgerät. Gegenstand der Erfindung ist insbesondere ein Verfahren zum Erfassen einer Kennung eines Kommunikatioristeilnehmers in einem Kommunikationsendgerät, ein Kommunikationsendgerät sowie eine SIM-Karte zur Verwendung in dem Kommunikationsendgerät. Bei der Kennung kann es sich insbesondere um eine Rufnummer des Kommunikationsteilnehmers oder eine ähnliche Kennung handeln, die verwendet werden kann, um eine Kommunikationsverbindung zu dem Kommunikationsteilnehmer aufzubauen.

Um mit einem Kommunikationsendgerät über ein Kommunikationsnetzwerk eine Verbindung zu einem anderen Teilnehmer aufzubauen, ist üblicherweise eine dem Teilnehmer bzw. seinem Endgerät zugeordnete Kennung anzugeben, bei der es sich beispielsweise um eine Rufnummer des Teilnehmers oder auch eine E-Mail-Adresse handeln kann. Anhand dieser Kennung wird der Teilnehmer oder sein Endgerät in dem Kommunikationsnetzwerk identifiziert, um die Verbindung herzustellen. Die Kennungen anderer Kommunikationsteilnehmer können in der Regel in einem so genannten Adressbuch des Endgeräts in Zuordnung zu weiteren Attributen des Teilnehmers gespeichert werden. Derartige weitere Attribute umfassen insbesondere einen Namen, der eine einfache Identifizierung des Teilnehmers ermöglicht. Unter Verwendung eines derartigen elektronischen Adressbuchs lässt sich eine Kommunikationsverbindung zu einem Teilnehmer beispielsweise in einfacher Weise durch die Auswahl des Namens herstellen. Darüber hinaus dienen Adressbücher dazu, Teilnehmerkennungen und weitere Angaben, wie etwa postalische Adressen des Teilnehmers für eine zukünftige Verwendung zu hinterlegen.

Es kann jedoch vorkommen, dass der Nutzer eines Kommunikationsendgeräts es versäumt, eine verwendete Teilnehmerkennung in einem Adressbuch des Endgeräts zu speichern. Oftmals ist dies mit dem Verlust der Telefonnummer verbunden. Ferner verfügen Kommunikationsendgeräte oftmals über mehrere Adressbücher, die von verschiedenen Anwendungen bereitgestellt werden und an verschiedenen Speicherstellen gespeichert sein können. So wird in mobilen Endgeräten, die mit einer SIM-Karte betrieben werden, üblicherweise ein Adressbuch von der SIM-Karte bereitgestellt und ein weiteres Adressbuch von der Mobilstation. Auch, wenn die Adressbucheinträge mehrerer Adressbücher vielfach gemeinsam angezeigt werden, muss der Nutzer eines Kommunikationsendgeräts mit mehreren Adressbüchern mehrere Anwendungen berücksichtigen, wenn er beispielsweise die in dem Kommunikationsendgerät gespeicherten Adressbucheinträge sichern und/oder zu einem anderen Endgerät übertragen bzw. in einem anderen Endgerät nutzen will. Dies ist in der Regel mit einem sehr hohen Aufwand für den Nutzer verbunden und birgt das Risiko, Adressbucheinträge zu verlieren.

Die US 2005/0138177 A1 offenbart ein Kommunikationsgerät mit einem Kommunikationsmanager. Der Kommunikationsmanager ist dabei dazu ausgestaltet, einen Kommunikationskontakt zu identifizieren und eine Verbindung zu dem Kommunikationskontakt herzustellen.

Die US 7,010,116 B1 offenbart ein Verfahren und ein Telefongerät, die die Eingabe einer Telefonnummer detektieren und festzustellen, ob diese Telefonnummer bereits zuvor eingegeben wurde.

Es ist eine Aufgabe der vorliegenden Erfindung, eine zuverlässige Speicherung von Teilnehmerkennungen an einem vorgegebenen Speicherort in einem Kommunikationsendgerät sicherzustellen.

Die Aufgabe wird gelöst durch ein Verfahren mit den Merkmalen des Patentanspruchs 1, durch ein Kommunikationsendgerät mit den Merkmalen des Anspruchs 11 und durch eine SIM-Karte mit den Merkmalen des Patentanspruchs 13. Ausführungsformen des Verfahrens, des Kommunikationsendgeräts und der SIM-Karte sind in den abhängigen Ansprüchen angegeben.

Gemäß einem ersten Aspekt der Erfindung wird ein Verfahren zum Erfassen einer Teilnehmerkennung in einem Kommunikationsendgerät vorgeschlagen. Das Verfahren umfasst die folgenden Schritte:
- Erhalten der Kennung, um anhand der Kennung eine Kommunikationsverbindung aufzubauen,
- Empfangen der Kennung in einer Erfassungseinrichtung des Kommunikationsendgeräts,
- Prüfen in der Erfassungseinrichtung, ob die Kennung in einem vorgegebenen Adressbuch des Kommunikationsendgeräts enthalten ist,
- Speichern der Kennung in dem Adressbuch, wenn festgestellt wird, dass die Kennung zuvor nicht in dem Adressbuch enthalten war
- Prüfen in der Erfassungseinrichtung, ob in dem Kommunikationsendgerät ein weiteres Adressbuch vorhanden ist, in dem die Kennung gespeichert ist;
- Prüfen in der Erfassungseinrichtung, ob der Kennung in dem weiteren Adressbuch Attribute zugeordnet sind;
- Speichern der Attribute in dem Adressbuch, so dass die Attribute der Kennung zugeordnet sind, und
- Ermöglichen des Aufbaus der Kommunikationsverbindung.

Gemäß einem zweiten Aspekt der Erfindung wird ein Kommurikationsendgerät vorgeschlagen, in dem eine Kennung eines Kommurükationsteilnehmers erhalten werden kann, um eine Kommunikationsverbindung aufzubauen. Das Kommunikationsendgerät umfasst eine Erfassungseinrichtung, die dazu ausgestaltet ist, die Kennung zu empfangen, zu prüfen, ob die Kennung in einem vorgegebenen Adressbuch des Kommunikationsendgeräts gespeichert ist, und die Kennung in dem Adressbuch zu speichern, wenn festgestellt wird, dass die Kennung zuvor nicht in dem Adressbuch gespeichert war. Die Erfassungseinrichtung ist zudem dazu ausgestaltet zu prüfen, ob in dem Kommunikationsendgerät ein weiteres Adressbuch vorhanden ist, in dem die Kennung gespeichert ist. Die Erfassungseinrichtung ist zudem dazu ausgestaltet zu prüfen, ob der Kennung in dem weiteren Adressbuch Attribute zugeordnet sind. Des Weiteren ist die Erfassungseinrichtung dazu ausgestaltet, die Attribute in dem Adressbuch zu speichern, so dass die Attribute der Kennung zugeordnet sind. Ferner ist die Erfassungseinrichtung dazu ausgestaltet, den Aufbau der Kommunikationsverbindung nach dem Empfang der Kennung zu ermöglichen.

Gemäß einem weiteren Aspekt der Erfindung wird eine SIM-Karte zur Verwendung in einem Kommunikationsendgerät geschaffen, in dem eine Kennung eines Kommunikationsteilnehmers erhalten werden kann, um eine Kommunikationsverbindung aufzubauen. Die SIM-Karte umfasst eine Erfassungseinrichtung, die dazu ausgestaltet ist, die Kennung zu empfangen, zu prüfen, ob die Kennung in einem vorgegebenen Adressbuch des Kommunikationsendgeräts gespeichert ist, und die Kennung in dem Adressbuch zu speichern, wenn festgestellt wird, dass die Kennung zuvor nicht im Adressbuch gespeichert war. Die Erfassungseinrichtung ist zudem dazu ausgestaltet zu prüfen, ob in dem Kommunikationsendgerät ein weiteres Adressbuch vorhanden ist, in dem die Kennung gespeichert ist. Die Erfassungseinrichtung ist zudem dazu ausgestaltet zu prüfen, ob der Kennung in dem weiteren Adressbuch Attribute zugeordnet sind. Des Weiteren ist die Erfassungseinrichtung dazu ausgestaltet, die Attribute in dem Adressbuch zu speichern, so dass die Attribute der Kennung zugeordnet sind. Ferner ist die Erfassungseinrichtung dazu ausgestaltet, den Aufbau der Kommunikationsverbindung nach dem Empfang der Kennung zu ermöglichen.

Vorteilhaft sieht die Erfindung vor, dass Teilnehmerkennungen von einer Erfassungseinrichtung in einem Adressbuch des Kommunikationsendgeräts gespeichert werden. Hierdurch wird sichergestellt, dass die Teilnehmerkennungen an einem definierten Ort in dem Kommunikationsendgerät gespeichert werden. Die Überprüfung, ob eine Teilnehmerkennung bereits in dem Adressbuch gespeichert ist und die daraufhin ggf. erfolgende Speicherung werden dann vorgenommen, wenn die Kennung erhalten wird, um eine Kommunikationsverbindung aufzubauen. Hierdurch wird erreicht, dass in dem vorgegebenen Adressbuch die Teilnehmerkennungen gespeichert werden, die von dem Nutzer des Kommunikationsendgeräts verwendet werden, um Kommunikationsverbindungen zu Kommunikationspartnern aufzubauen, und die insoweit für den Kommunikationsendgerätenutzer wichtig sind.

Die Erfassungseinrichtung kann innerhalb einer SIM-Karte des Kommunikationsendgeräts implementiert sein. Unter einer SIM-Karte wird im Rahmen der vorliegenden Erfindung eine Chipkarte verstanden, die ein lösbarer Bestandteil eines Kommunikationsendgeräts ist und eine Einrichtung zur Identifizierung und/oder Authentifizierung des Nutzers über ein Kommunikationsnetzwerk enthält. Derartige SIM-Karten werden zur Teilnehmeridentifizierung und/oder
-authentifizierung in Mobilfunknetzwerken eingesetzt. Die SIM-Karte kann als ein Subscriber Identification Module (SIM) nach dem GSM-Standard ausgestaltet sein (GSM: Global System for Mobile Communications). Gleichfalls umfasst der Begriff SIM-Karte jedoch auch andere Chipkarten, die im Wesentlichen entsprechend ausgestaltet sind.

In einer Ausgestaltung des Verfahrens, des Kommunikationsendgeräts und der SIM-Karte ist vorgesehen, dass die Kennung aufgrund einer Eingabe von in der Kennung enthaltenen Zeichen an dem Kommunikationsendgerät oder aufgrund einer Auswahl einer in dem Kommunikationsendgerät gespeicherten Kennung erhalten wird. Zur Auswahl der Kennung kann das Kommunikationsendgerät insbesondere ein weiteres Adressbuch bereitstellen. In diesem Adressbuch gespeicherte Teilnehmerkennungen werden von der Erfassungseinrichtung in dem vorgegebenen Adressbuch gespeichert, wenn sie ausgewählt werden, um eine Kommunikationsverbindung aufzubauen.

Unter einem Adressbuch wird vorliegend eine Anwendung verstanden, die es ermöglicht, Kennungen von Kommunikationsteilnehmern für eine weitere Verwendung in dem Kommunikationsendgerät zu speichern. Verzugsweise erlaubt das Adressbuch zudem die Zuordnung von Attributen zu den gespeicherten Kennungen. Das Verfahren, das Kommunikationsendgerät und die SIM Karte sehen vor, dass wenigstens ein Attribut in Zuordnung zu der Kennung in dem Adressbuchs gespeichert werden kann. Das Attribut kann beispielsweise eine einfachere Identifizierung des Teilnehmers ermöglichen, dem die Teilnehmerkennung zugeordnet ist. Insbesondere kann es sich bei dem Attribut beispielsweise um einen Namen des Teilnehmers handeln.

Das Attribut kann von dem Nutzer des Kommunikationsendgeräts angegeben werden. Daher zeichnet sich eine Ausführungsform des Verfahrens, des Kommunikationsendgeräts und der SIM-Karte dadurch aus, dass aufgrund des Empfangs der Kennung in der Erfassungseinrichtung eine Abfrage des Attributs über eine Benutzerschnittstelle des Kommunikationsendgeräts erfolgt. Bei der Abfrage kann der Endgerätenutzer das Attribut an dem Kommunikationsendgerät eingeben. Wenn die Teilnehmerkennung zuvor jedoch bereits in einem weiteren Adressbuch des Kommunikationsendgeräts gespeichert war, ist in diesem Adressbuch in der Regel bereits eine Zuordnung eines Attributs zu der Teilnehmerkennung hinterlegt. Das Attribut wird aus dem weiteren Adressbuch übernommen, wenn die Teilnehmerkennung in einem weiteren Adressbuch des Kommunikationsendgeräts gespeichert war.

Nachdem die Teilnehmerkennungen in dem vorgegebenen Adressbuch des Kommunikationsendgeräts gespeichert worden sind, kann durch Auswahl einer Kennung aus dem Adressbuch eine Kommunikationsverbindung aufgebaut werden. In diesem

Fall wird die Teilnehmerkennung jedoch nicht noch einmal in dem vorgegebenen Adressbuch gespeichert, um Doppeleinträge zu vermeiden. Daher ist eine Ausgestaltung des Verfahrens, des Kommunikationsendgeräts und der SIM-Karte dadurch gekennzeichnet, dass der Aufbau der Kommunikationsverbindung ermöglicht wird, ohne die Kennung zu speichern, wenn die Kennung zuvor bereits in dem Adressbuch gespeichert war.

Eine Weiterbildung der Erfindung beinhaltet, dass das Kommunikationsendgerät als ein mobiles Kommunikationsendgerät ausgestaltet und die Erfassungseinrichtung Bestandteil einer SIM-Karte des Kommunikationsendgerätes ist. Nutzer von mobilen Kommunikationsendgeräten profitieren besonders von der vorgesehenen Speicherung von Teilnehmerkennungen, denn diese müsse zuvor in dem Kommunikationsendgerät gespeichert worden sein, um sie unterwegs zur Verfügung zu haben. Die in der SIM-Karte implementierte Erfassungseinrichtung ist vorzugsweise als eine Anwendung ausgestaltet, die in der SIM-Karte ausgeführt wird.

Eine Implementierung der Erfassungseinrichtung in der SIM-Karte eines mobilen Kommunikationsendgeräts macht es erforderlich, dass eine Teilnehmerkennung, die angegeben wird, um eine Kommunikationsverbindung aufzubauen, an die SIM-Karte gemeldet wird. Eine Ausgestaltung des Verfahrens, des Kommunikationsendgeräts und der SIM-Karte sieht vor, dass die angegebene Kennung aufgrund eines in dem Kommunikationsendgerät aktivierten Dienstes an die SIM-Karte übermittelt. wird, wobei durch den Dienst Verbindungsdetails einer mittels des Kommunikationsendgeräts aufzubauenden Kommunikationsverbindung an die SIM-Karte übermittelt. werden.

Eine verbundene Ausgestaltung des Verfahrens, des Kommunikationsendgeräts und der SIM-Karte zeichnet sich dadurch aus, dass es sich bei dem Dienst um eine Call-Control-Funktion eines SIM Application Toolkit, USIM Application Toolkit oder eines vergleichbaren Card Application Toolkit (USIM: Universal Subscriber Identity Module). Wenn die Call-Control-Funktion aktiviert ist, dann werden Verbindungsdetails, wie insbesondere die verwendete Teilnehmerkennung, vordem Aufbau einer Kommunikationsverbindung an die SIM-Karte übergeben. Damit kann vorteilhaft eine standardmäßig vorgesehene Funktion dazu verwendet werden, Kennungen an die Erfassungseinrichtung zu übergeben, um sie gegebenenfalls in dem vorgesehenen Adressbuch zu speichern. Dies ermöglicht eine besonders einfache Implementierung in dem Kommunikationsendgerät. Eine Anpassung der Mobilstation ist bei Nutzung der Funktion nicht erforderlich, so dass das Verfahren mit konventionellen Mobilstationen ausführbar ist.

Das vorgegebene Adressbuch ist in einer Ausführungsform des Verfahrens, des Kommunikationsendgeräts und der SIM-Karte in der SIM-Karte gespeichert. Ein Vorteil der Speicherung von Teilnehmerkennungen in dem Adressbuch der SIM-Karte besteht insbesondere darin, dass die Teilnehmerkennungen in einfacher Weise in einem anderen Kommunikationsendgerät verfügbar gemacht werden können. Hierzu braucht lediglich die SIM-Karte in die andere Mobilstation eingesetzt zu werden. Ein weiterer Vorteil besteht darin, dass Dienste genutzt werden können, die von einem Mobilfunkbetreiber im Zusammenhang mit der SIM-Karte angeboten werden. Hierbei kann es sich etwa um einen Dienst handeln, bei dem die in der SIM-Karte gespeicherten Adressbucheinträge netzwerkseitig hinterlegt werden können, um sie beispielsweise zu sichern.

Eine Ausführungsform des Verfahrens, des Kommunikationsendgeräts und der SIM-Karte ist dadurch gekennzeichnet, dass es sich bei der Kennung um eine Rufnummer eines Teilnehmers handelt. Derartige Rufnummern werden üblicherweise dazu verwendet, Anrufe zu dem Teilnehmer aufzubauen oder auch dazu, Nachrichten an den Teilnehmer zu senden. Dementsprechend beinhaltet eine Ausgestaltung des Verfahrens, des Kommunikationsendgeräts und der SIM-Karte, dass die Kommunikationsverbindung als Sprachverbindung zu dem Kommunikationsendgerät des Teilnehmers und/oder die Übermittlung einer Nachricht an das Kommunikationsendgerät des Teilnehmers umfasst. Alternativ kann es sich bei der Kennung auch um eine E-Mail-Adresse oder eine weitere Kennung eines Kommunikationsteilnehmers handeln, die verwendet wird, um über einen bestimmten Kommunikationsdienst mit dem Kommunikationsteilnehmer in Verbindung zu treten.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung eines Kommunikationsendgerät mit einer Erfassungseinrichtung nach der vorliegenden Erfindung,
- Fig. 2: ein schematisches Blockdiagramm einer Erfassungseinrichtung und eines Adressbuchs in einer SIM-Karte des Kommunikationsendgeräts und
- Fig. 3: ein schematisches Ablaufdiagramm, welches die Erfassung einer angegebenen Rufnummer verdeutlicht.

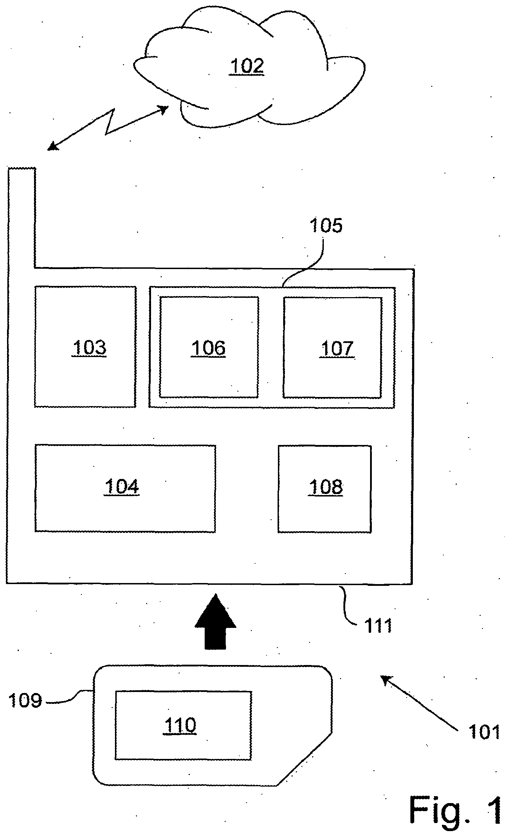

In Fig. 1 sind in einer schematischen Darstellung Komponenten eines Kommunikationsendgeräts 101 gezeigt, das mit einem Kommunikationsnetzwerk 102 verbunden werden kann. Das Kommunikationsnetzwerk 102 stellt Kommunikationsdienste bereit, die es erlauben, Kommunikationsverbindungen zwischen dem Endgerät 101 und einem Kommunikationspartner aufzubauen. Die Kommunikationsdienste können insbesondere einen Dienst für Sprach- und/oder Videoverbindungen umfassen, sowie Dienste zur Übermittlung von Nachrichten an Kommunikationsteilnehmer. Als Kommunikationsteilnehmer werden hier Personen bezeichnet, die an einer Kommunikation über einen Kommunikationsdienst teilnehmen können. Hierzu brauchen die Kommunikationsteilnehmer keinen direkten Zugriff auf das Kommunikationsnetzwerk 102 zu haben, sondern können auch über andere, in der Figur nicht gezeigte Netzwerke mit dem Kommunikationsnetzwerk 102 verbunden sein.

In der beispielhaft dargestellten Ausgestaltung handelt es sich bei dem Endgerät 101 um ein mobiles Endgerät, das etwa als ein Mobiltelefon, ein PDA (Personal Data Assistant) oder ein ähnliches Gerät ausgestaltet ist. Das mobile Endgerät 101 kann drahtlos mit einem Kommunikationsnetzwerk 102 verbunden werden, das als Mobilfunknetzwerk ausgebildet ist. Das Kommunikationsnetzwerk 102 ist beispielsweise nach dem GSM-Standard (GSM: Global System for Mobile Communications) oder dem UMTS-Standard (UMTS: Universal Mobile Telecommunications System) ausgestaltet. Für den Aufbau von Kommunikationsverbindungen kann das Mobilfunknetzwerk 102 beispielsweise einen Dienst für Sprachanrufe, einen Dienst für Videoanrufe, einen Kurznachrichtendienst (Short Message Service, SMS) und einen Multimedianachrichtendienst (Multimedia Message Service, MMS) bereitstellen.

Das Endgerät 101 umfasst in der dargestellten Ausgestaltung eine Mobilstation 111 und eine in die Mobilstation 111 eingesetzte SIM-Karte 109. Zur drahtlosen Verbindung mit dem Kommunikationsnetzwerk 102 weist die Mobilstation 111 ein Funkmodul 103 auf. Das Funkmodul 103 ist in einer dem Fachmann an sich bekannten Art ausgeführt und an das Kommunikationsnetzwerk 102 angepasst. Um einem Nutzer die Bedienung des Endgeräts 101 zu ermöglichen, weist die Mobilstation 111 eine Benutzerschnittstelle 105 auf. Die Benutzerschnittstelle 105 umfasst vorzugsweise eine Anzeigeeinrichtung 106, welche beispielsweise als Display ausgestaltet sein kann. Ferner umfasst die Benutzerschnittstelle 105 eine Eingabeeinrichtung 107, bei der es sich beispielsweise um eine Tastatur handeln kann. Die Tastatur kann insbesondere Tasten umfassen, welche die Eingabe von Ziffern und/oder Buchstaben ermöglicht. Zur Durchführung von Sprach- und Videoanrufen verfügt die Mobilstation 111 über einen in der Figur nicht dargestellten Lautsprecher zur Wiedergabe von Audiosignalen sowie über ein Mikrofon zum Erfassen von Spracheingaben des Nutzers.

Die Mobilstation 111 wird durch eine Prozessoreinrichtung 104 gesteuert, die mit den übrigen Komponenten der Mobilstation 111 verbunden ist. Funktionen der Mobilstation 111 sind vorzugsweise als Softwareanwendungen implementiert, die in der Prozessoreinrichtung 104 ausgeführt werden. Die Prozessoreinrichtung 104 hat Zugriff auf eine Speichereinrichtung 108, in der Programme gespeichert werden können, die in der Prozessoreinrichtung 104 ausgeführt werden. Darüber hinaus können in der Speichereinrichtung 108 Daten gespeichert werden, welche im Betrieb des Endgeräts 101 verwendet werden.

Bei der SIM-Karte 109 handelt es sich um eine Chipkarte, die lösbar mit der Mobilstation 111 verbunden ist. Hierzu ist die SIM-Karte 109 in einen in der Figur nicht dargestellten Kartenleser der Mobilstation 111 eingesetzt. Die SIM-Karte 109 verfügt über einen Mikrocontroller 110 zum Ausführen von Programmen und zum Speichern von Daten. In dem Fachmann an sich bekannter Weise ermöglicht die SIM-Karte 109 eine Identifizierung und Authentisierung des Nutzers bzw. des Endgeräts 101 in dem Kommunikationsnetzwerk 102. Hierzu stellt die SIM-Karte 109 entsprechende Funktionen und Daten bereit, die durch einen Sicherheitsmechanismus geschützt sind.

Die SIM-Karte 109 ist entsprechend dem Kommunikationsnetzwerk 102 ausgestaltet, in dem das Endgerät 101 verwendet wird, und wird etwa von dem Betreiber des Heimatnetzwerks des Endgerätenutzers ausgegeben. Dieses ist das Kommunikationsnetzwerk 102 des Betreibers, mit dem der Nutzer einen Mobilfunkvertrag geschlossen hat. Handelt es sich bei dem Heimatnetzwerk 102 um ein GSM-Netzwerk, ist die SIM-Karte 109 als ein SIM (Subscriber Identifity Module) nach dem GSM-Standard ausgestaltet. Sofern es sich um ein UMTS-Netzwerk handelt, enthält die SIM-Karte 109 eine USIM-Anwendung (USIM: Unversal Subscriber Identity Module) nach dem UMTS-Standard. In anderen Mobilfunknetzwerken 102 ist die SIM-Karte 109 ebenfalls der Art des Netzwerks 102 entsprechend mit einem an das Netzwerk 102 angepassten Modul zur Identifizierung und/oder Authentifizierung des Endgeräterlutzers bzw. seiner SIM-Karte 109 gegenüber dem Mobilfunknetzwerk 102 ausgerüstet.

In der SIM-Karte 109 ist ein Mechanismus implementiert, mit dem die SIM-Karte 109 auf das Endgerät 101 bzw. dessen Funktionen zugreifen kann. Ist die SIM-Karte 109 als SIM gemäß dem GSM-Standard ausgestaltet, handelt es sich hierbei um das SIM Application Toolkit (SAT), das insbesondere in dem 3GPP-Dokument TS 11.14 spezifiziert ist. Für ein USIM nach dem UMTS-Standard werden die entsprechenden Funktionen durch das USIM Application Toolkit (USAT) bereitgestellt, das insbesondere in dem 3GPP-Dokument TS 31.111 sowie in dem ETSI-Dokument TS 102 223 spezifiziert ist. Im Folgenden wird auf die in der SIM-Karte 109 implementierte Sammlung von SAT- oder USAT-Funktionalitäten abkürzend als SAT Bezug genommen. Hiermit wird jedoch insbesondere das USAT gemeint, wenn die SIM-Karte 109 ein USIM umfasst, oder ein vergleichbares Card Application Toolkit gemäß dem Dokument TS 102 223.

Um über einen von dem Kommunikationsnetzwerk 102 bereitgestellten Kömmunikationsdienst eine Kommunikationsverbindung zu einem anderen Teilnehmer aufzubauen, wird üblicherweise eine Kennung dieses Teilnehmers angegeben. Diese richtet sich insbesondere nach dem Kommunikationsdienst, über den die Kommunikationsverbindung aufgebaut werden soll. Eine derartige Kennung ist eine Rufnummer des Kommunikationspartners, die beispielsweise für den Aufbau von Anrufen oder das Versenden von SMS- oder MMS-Nachrichten verwendet wird. Bei der Rufnummer handelt es sich um eine MSISDN (Mobile Subscriber Integrated Services Digital Network Number). Die Rufnummer umfasst dabei eine Mehrzahl von Ziffern, die von dem Nutzer des Endgeräts 101 mittels der Eingabeeinrichtung 107 eingegeben werden können, um eine Kommunikationsverbindung zu einem gewünschten Teilnehmer aufzubauen. Für das Versenden von E-Mail-Nachrichten wird beispielsweise eine E-Mail-Adresse des Kommunikationspartners als Teilnehmerkennung verwendet.

Um die Verwaltung von Teilnehmerkennungen von Kommunikationspartnern zu vereinfachen, umfasst das Endgerät 101 wenigstens eine Adressbuchanwendung 201, die hier auch kurz als Adressbuch bezeichnet wird. Die Adressbuchanwendung 201 ermöglicht es, Kennungen von Kommunikationsteilnehmern für eine Verwendung zu speichern, und erlaubt vorzugsweise, Kennungen auszuwählen und aufzurufen, um Kommunikationsverbindungen zu den betreffenden Kommunikationsteilnehmers aufzubauen. Zudem enthält die Adressbuchanwendung 201 vorzugsweise Zuordnungen zwischen Kennungen von Kommunikationspartnern und einem oder mehreren weiteren Attributen. Bei dem einer Kennung zugeordneten Attribut kann es sich beispielsweise um einen Namen des entsprechenden Teilnehmers oder eine andere von dem Endgerätenutzer gewählte Beschreibung des Kommunikationspartners handeln, die dessen einfache Identifizierung ermöglicht. Der Aufruf einer Kennung aus dem Adressbuch 201 bezieht sich dabei beispielsweise auf den Namen des Kommunikationspartners, der entweder mittels der Eingabeeinrichtung 107 eingegeben oder aus einer Liste ausgewählt werden kann. Hierdurch wird die Verwaltung und Verwendung der Kennungen vereinfacht.

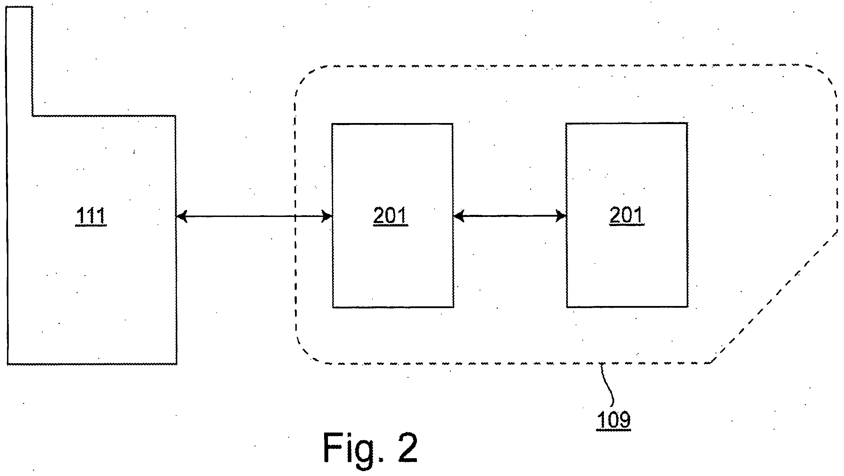

Die Adressbuchanwendung 201 ist in der SIM-Karte 109 implementiert, wie es in dem funktionellen Blockdiagramm in Figur 2 schematisch dargestellt ist. Die SIM-Karte 109 verfügt dazu über die entsprechende Programmsoftware und über eine Datei und/oder Datenbank zum Speichern der Kennungen in Zuordnung zu dem Attribut oder den Attributen. Optional kann eine weitere Adressbuchanwendung in der Mobilstation 111 implementiert sein. Teilnehmerkennungen können von dem Nutzer des Endgeräts 101 grundsätzlich in dem Adressbuch 201 der SIM-Karte 109 oder in dem Adressbuch der Mobilstation 111 gespeichert werden.

Ein Vorteil der Speicherung von Teilnehmerkennungen in dem Adressbuch 201 der SIM-Karte 109 besteht insbesondere darin, dass die Teilnehmerkennungen durch Einsetzen der SIM-Karte 109 in einer anderen Mobilstation 111 verfügbar gemacht werden können - beispielsweise, wenn der Nutzer die Mobilstation 111 wechselt oder in mehreren Mobilstationen 111 mit derselben SIM-Karte 109 .verwendet. Darüber hinaus können in Bezug auf die in der SIM-Karte 109 gespeicherten Teilnehmerkennungen Dienste genutzt werden, die von der SIM-Karte 109 bereitgestellt werden. Ein Beispiel für einen derartigen Dienst ist eine von dem Betreiber des Heimatnetzwerks des Nutzers angebotene Sicherung von Adressbucheinträgen für das in der SIM-Karte 109 gespeicherte Adressbuch 201.

Um die von dem Endgerätenutzer zum Aufbau von Kommunikationsverbindungen verwendeten Teilnehmerkennungen möglichst vollständig in dem Adressbuch 201 der SIM-Karte 109 zu speichern, weist die SIM-Karte 109 eine Erfassungseinrichtung 202 auf, die dazu ausgestaltet ist, die Teilnehmerkennung bei Verwendung automatisch in dem Adressbuch 201 der SIM-Karte 109 zu speichern. Die Erfassungseinrichtung 202 ist vorzugsweise als eine Anwendung ausgestaltet, die in dem Mikrocontroller 110 der SIM-Karte 109 ausgeführt wird. In einer Ausgestaltung kann die SIM-Karte 109 als eine so genannte Java-Card ausgestaltet sein, welche die Ausführung von Java-Anwendungen gestattet. Die Erfassungseinrichtung 202 kann in diesem Fall in Form einer Java-Anwendungen implementiert sein.

In einer Ausgestaltung verwendet die Erfassungseinrichtung 202 der SIM-Karte 109 die Call-Controll-Funktion des SAT, falls es sich bei der Kommunikationsverbindung um einen Anruf handelt. Wenn die Call-Control-Funktion aktiviert ist, dann werden Verbindungsdetails, wie insbesondere die verwendete Rufnummer, vor dem Aufbau des Anrufs an die SIM-Karte 109 übermittelt. Die SIM-Karte 109 hat dann die Möglichkeit, den Anrufaufbau zu erlauben, zu untersagen oder den Anruf bzw. die übermittelten Anrufdetails zu verändern. Vorliegend wird in der SIM-Karte 109 eine Rufnummer, die aufgrund der aktivierten Call-Control-Funktion empfangen worden ist, an die in der SIM-Karte 109 implementierte Erfassungseinrichtung 202. übergeben. Auf diese Weise erhält die Erfassungseinrichtung 202 Kenntnis von einem Anrufaufbau und erhält zudem die verwendete Rufnummer. Falls anstelle eines Anrufs ein anderer von dem Kommunikationsnetzwerk 102 bereitgestellter Kommunikationsdienst für den Aufbau einer Kommunikationsverbindung verwendet werden soll, können der Call-Control-Funktion entsprechende Funktionen verwendet werden, welche die Erfassungseinrichtung 202 über den Aufbau der Kommunikationsverbindung und über die verwendete Teilnehmerkennung informieren. In Bezug auf den Versand von SMS-Nachrichten stellt das SAT insbesondere eine solche Funktion bereit, die als MO SMS Control (Mobile Originating SMS Control) bezeichnet wird und vorliegend eingesetzt werden kann, um die verwendete Teilnehmerkennung der Erfassungseinrichtung 202 zugänglich zu machen, wenn eine SMS-Nachricht versand wird.

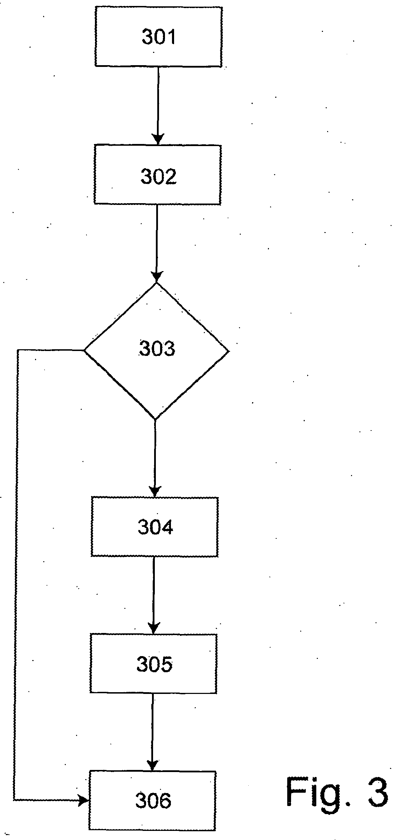

Das Speichern von verwendeten Teitnehmerkennungen in dem Adressbuch 201 der SIM-Karte 109 wird unter Bezugnahme auf Figur 3 näher erläutert, die schematisch den Ablauf der Erfassung einer Teilnehmerkennung veranschaulicht. Wenn der Nutzer des Endgeräts 101 den Aufbau einer Kommunikationsverbindung zu einem Teilnehmer startet, dann wird zunächst die von dem Nutzer in der zuvor beschriebenen Weise angegebene Teilnehmerkennung des Kommunikationspartners angegeben (Schritt 301). Dies geschieht durch manuelle Eingabe der Kennung an dem Endgerät 101 oder durch Auswahl der Kennung aus einem Adressbuch des Endgeräts 101. Nachdem der Endgerätenutzer die Kommunikationsverbindung initiiert hat, wird die angegebenen Teilnehmerkennung des Kommunikationspartners an die Erfassungseinrichtung 202 übermittelt (Schritt 302). Die Übermittlung der Teilnehmerkennung an die Erfassungseinrichtung 202 geschieht in der zuvor beschriebenen Weise und wird im Falle eines Sprachanrufs von der aktivierten Call-Control-Funktion vorgenommen bzw. gesteuert.

Wenn der Erfassungseinrichtung 202 aufgrund des beabsichtigten Aufbaus einer Kommunikationsverbindung eine Teilnehmerkennung übermittelt worden ist, dann lässt diese vorzugsweise den Aufbau der Kommunikationsverbindung, das heißt beispielsweise den Rufaufbau oder den Versand einer Kurznachricht, zunächst nicht zu und verzögert die Kommunikationsverbindung. Während der Verzögerungszeit greift die Erfassungseinrichtung 202 auf das Adressbuch 201 der SIM-Karte 109 zu und prüft, ob die erhaltene Teilnehmerkennung bereits in dem Adressbuch 201 der SIM-Karte 109 gespeichert ist (Schritt 303).

Wenn die Erfassungseinrichtung 202 in Schritt 303 feststellt, dass die empfangene Teilnehmerkennung bereits in dem Adressbuch 201 der SIM-Karte 109 gespeichert ist, dann wird der Aufbau der Kommunikationsverbindung zugelassen (Schritt 306). Hierzu sendet die Erfassungseinrichtung 202 das entsprechende Kommando an das Endgerät 101 bzw. die Prozessoreinheit 104 des Endgeräts 101. Der Endgerätenutzer wird über die im Hintergrund durch die SIM-Karte 109 vorgenommene Prüfung vorzugsweise nicht informiert. Er bekommt damit von der Prüfung im Wesentlichen nichts mit, außer möglicherweise einer geringen Verzögerung des Aufbaus der Kommunikationsverbindung.

Wenn die Erfassungseinrichtung 202 in dem Schritt 303 feststellt, dass die empfangene Teilnehmerkennung nicht in dem Adressbuch 201 der SIM-Karte 109 gespeichert ist, dann erzeugt die Erfassungseinrichtung 202 einen die Teilnehmerkennung enthaltenden Eintrag in dem Adressbuch 201 der SIM-Karte 109 (Schritt 305), so dass die Teilnehmerkennung in dem SIM-Adressbuch 201 und folglich in der SIM-Karte 109 gespeichert ist.

Die Teilnehmerkennung wird in einer Ausgestaltung so gespeichert, wie sie in den erhaltenen Verbindungsdetails angegeben wird, um die Kommunikationsverbindung aufzubauen. Insbesondere bedeutet dies, dass eine erhaltene Rufnummer zusammen mit den angegebenen Vorwahlen, vor allem Auslandsvorwahten, gespeichert wird. Ist keine Vorwahl vorhanden, beispietsweise weil es sich um eine Kommunikationsverbindung im Inland handelt, dann ergänzt die Erfassungseinrichtung 202 in einer weiteren Ausgestaltung die Vorwahl und speichert die ergänzte Rufnummer in dem Adressbuch 201. Bei der ergänzten Vorwahl handelt es sich vorzugsweise um die Vorwahl des Landes, in dem sich das Endgerät 101 aktuell befindet. Das Land bzw. die Vorwahl kann dem Endgerät 101 von dem Kommunikationsnetzwerk 102 gemeldet werden.

Optional führt die Erfassungseinrichtung 202 im Zusammenhang mit der Speicherung unter Verwendung der Benutzerschnittstelle 105 eine Abfrage von Attributen durch (Schritt 304), die zusammen mit der Rufnummer in dem Eintrag dem Adressbuch 201 gespeichert werden. Es können eines oder mehrere Attribute abgefragt werden, die in Zuordnung zu der Rufnummer in dem Adressbuch 201 gespeichert werden. Vorzugsweise kann insbesondere ein Name des Teilnehmers, dem die Teilnehmerkennung zugeordnet ist, von dem Endgerätenutzer angegeben werden. Weitere Attribute, die abgefragt werden können, sind beispielsweise zusätzliche Namen oder eine Adresse des Teilnehmers. Zur Abfrage der Attribute steuert die Erfassungseinrichtung 202 die Darstellung eines entsprechenden Eingabefeldes an der Anzeigeeinrichtung 106 des Endgeräts 101. Zusätzlich zu dem Eingabefeld selbst wird vorzugsweise auch das einzugebende Attribut an der Anzeigeeinrichtung 106 durch eine entsprechende Anzeige identifiziert. Mittels der Eingabeeinrichtung 107 des Endgeräts 101 kann der Nutzer das Eingabefeld ausfüllen und so das Attribut angeben. Die Eingabe des Nutzers wird an die Erfassungseinrichtung 202 der SIM-Karte 109 übermittelt. Zur Durchführung der Abfrage verwendet die Erfassungseinrichtung 202 in einer Ausgestaltung proaktive SAT-Kommandos. Beispielsweise können das Kommando "Display Text" zur Darstellung von Texten der Anzeigeeinrichtung 106 sowie das Kommando "Get Input" zur Abfrage von Eingabedaten verwendet werden.

Zusätzlich oder alternativ zu der Möglichkeit, Attribute des Kommunikationspartners anzugeben, die in Zuordnung zu der Teilnehmerkennung in dem Adressbuch 201 der SIM-Karte 109 gespeichert werden sollen, kann die Erfassungseinrichtung 202 den Nutzer bei der Abfrage zur Bestätigung des Speichems der Teilnehmerkennung in der SIM-Karte 109 auffordern. Insbesondere kann der Endgerätenutzer durch eine entsprechende Anzeige von der Anzeigeeinrichtung 106 dazu auffordern, das Speichern der Rufnummer zu bestätigen oder abzulehnen. Lehnt der Nutzer das Speichern durch eine entsprechende Eingabe an der Eingabeeinrichtung 107 ab, wird die Speicherung nicht vorgenommen. Das Speichern der Rufnummer im Schritt 305 erfolgt in dieser Ausgestaltung dann, wenn der Nutzer das Speichern mittels der Eingabeeinrichtung 107 bestätigt.

Die zuvor beschriebene Abfrage wird in einer Ausgestaltung, die auch in der Figur 2 veranschaulicht ist, vor dem Aufbau der Kommunikationsverbindung vorgenommen. Nachdem die Teilnehmerkennung und optional das angegebene Attribut in dem Adressbuch 201 der SIM-Karte 109 gespeichert worden sind, wird die Kommunikationsverbindung zugelassen (Schritt 306). Um die Kommunikationsverbindung zuzulassen wird, wie zuvor beschrieben, das entsprechende Kommando an das Endgerät 101 übermittelt. In einer alternativen Ausführungsform wird der Aufbau der Kommunikationsverbindung bereits vor der Abfrage und vorzugsweise auch vor dem Speichern der Teilnehmerkennung zugelassen. Dies erhöht den Komfort für den Endgerätenutzer, der die Abfrage in diesem Fall nicht als Unterbrechung beim Aufbau der Kommunikationsverbindung wahrnimmt.

Die Abfrage wird in dieser Ausführungsform erst dann vorgenommen, wenn die Kommunikationsverbindung endgeräteseitig oder nutzerseitig abgewickelt worden ist, d.h. wenn die Kommunikationsverbindung keine Aktion des Endgeräts 101 oder keine Nutzerinteraktion zwischen dem Endgerät 101 und dem Endgerätenutzer mehr erfordert. Bei Anrufen kann die Abfrage beispielsweise dann vorgenommen werden, wenn der Anruf beendet worden ist. Beim Versenden einer Nachricht kann die Abfrage beispielsweise vorgenommen werden, nachdem der Nutzer das Absenden der Nachricht ausgelöst hat oder nachdem die Nachricht von dem Endgerät 101 abgesendet worden ist.

Die vor dem Aufbau der Kommunikationsverbindung empfangene Teilnehmerkennung wird in dieser Ausführungsform bis zur Durchführung der Abfrage in der SIM-Karte 109 zwischengespeichert. Nach der Durchführung der Abfrage werden die Teilnehmerkennung und das optional einzugebende Attribut in dem Adressbuch 201 der SIM-Karte 109 gespeichert, wenn der Endgerätenutzer das Speichern nicht durch eine entsprechende Reaktion auf die Abfrage unterdrückt. In diesem Fall wird die erfasste Teilnehmerkennung verworfen.

Die Prüfung, ob die für den Aufbau einer Kommunikationsverbindung verwendete Teilnehmerkennung bereits in dem Adressbuch 201 der SIM-Karte gespeichert ist, kann gleichfalls erst nach der endgeräteseitigen oder nutzerseitigen Abwicklung der Kommunikationsverbindung erfolgen. Dies hat den Vorteil, dass die Kommunikationsverbindung rascher aufgebaut werden kann. Bis zur Abwicklung der Kommunikationsverbindung wird die erhaltene Teilnehmerkennung in diesem Fall von der Erfassungseinrichtung 202 zwischengespeichert.

Eine weitere Ausgestaltung sieht vor, dass die Erfassungseinrichtung 202 Teilnehmerkennungen erkennt, die von dem Endgerätenutzer aus dem Adressbuch 201 der Mobilstation 111 ausgewählt worden sind, um eine Kommunikationsverbindung zu einem Kommunikationspartner aufzubauen. Wie im Adressbuch 201 der SIM-Karte 109 sind die Teilnehmerkennungen in dem Adressbuch der Mobilstation 111 in der Regel in Zuordnung zu einem Attribut gespeichert, das insbesondere eine einfachere Identifikation des jeweiligen Kommunikationspartners gestattet, dem die Teilnehmerkennung zugeordnet ist. Wenn die Erfassungseinrichtung 202 feststellt, dass eine erfasste Teilnehmerkennung in .dem Adressbuch der Mobilstation 111 enthalten ist, dann wird das in diesem Adressbuch gespeicherte Attribut von der Erfassungseinrichtung 202 ermittelt. Die Teilnehmerkennung kann dann unter Zuordnung zu dem ermittelten Attribut in dem Adressbuch 201 der SIM-Karte 109 gespeichert werden. Dies hat den Vorteil, dass der Endgerätenutzer kein der Teilnehmerkennung zuzuordnendes Attribut anzugeben braucht, wenn ein solches bereits in dem Endgerät 101 vorliegt. Wie in den zuvor beschriebenen Ausführungsbeispielen kann es jedoch gleichfalls vorgesehen sein, dass der Endgerätenutzer aufgefordert wird, das Speichern der Teilnehmerkennung in dem Adressbuch 201 der SIM-Karte 109 zu bestätigen. Nur wenn das Speichern von dem Nutzer bestätigt wird, wird in diesem Fall die Teilnehmerkennung in dem Adressbuch 201 der SIM-Karte 109 hinterlegt. Ansonsten wird die Teilnehmerkennung nicht in dem Adressbuch 201 der SIM-Karte 109 gespeichert. Die Bestätigungsabfrage kann, wie zuvor bereits beschrieben, vor dem Aufbau der Kommunikationsverbindung vorgenommen werden oder im Anschluss an die endgeräteseitige oder nutzerseitige Abwicklung der Kommunikationsverbindung.

Die zuvor beschriebene automatisierte Speicherung von Teilnehmerkennungen in dem Adressbuch 201 der SIM-Karte 109 stellt sicher, dass von dem Endgerätenutzer verwendete Teilnehmerkennungen in der SIM-Karte 109 verfügbar sind. Dies erleichtert insbesondere die Übertragung von Teilnehmerkennungen in ein anderes Endgerät 101 des Nutzers. Zur Übertragung der Teilnehmerkennung braucht lediglich die SIM-Karte 109 in die Mobilstation 111 des anderen Endgeräts 101 eingesetzt zu werden. Weiterhin können Dienste genutzt werden, die von einem Mobilfunkbetreiber in Zusammenhang mit dem Adressbuch 201 der SIM-Karte 109 angeboten werden. Hierbei kann es sich etwa um einen Dienst handeln, bei dem die in der SIM-Karte 109 gespeicherten Adressbucheinträge netzwerkseitig hinterlegt werden können, um sie beispielsweise zu sichern.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannter Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Erfassen einer Kennung eines Kommunikationsteilnehmers in einem Kommunikationsendgerät (101) mit den folgenden Schritten:
- Erhalten der Kennung, um anhand der Kennung eine Kommunikationsverbindung aufzubauen;
- Empfang der Kennung in einer Erfassungseinrichtung (202) des Kommunikationsendgeräts (101);
- Prüfen in der Erfassungseinrichtung (202), ob die Kennung in einem vorgegebenen Adressbuch (201) des Kommunikationsendgeräts (101) enthalten ist;
- Speichern der Kennung in dem Adressbuch (201), wenn festgestellt wird, dass die Kennung zuvor nicht in dem Adressbuch (201) enthalten war;
- Prüfen in der Erfassungseinrichtung (202), ob in dem Kommunikationsendgerät ein weiteres Adressbuch vorhanden ist, in dem die Kennung gespeichert ist;
- Prüfen in der Erfassungseinrichtung (202), ob der Kennung in dem weiteren Adressbuch Attribute zugeordnet sind;
- Speichern der Attribute in dem Adressbuch (201), so dass die Attribute der Kennung zugeordnet sind; und
- Ermöglichen des Aufbaus der Kommunikationsverbindung.

2. Verfahren nach Anspruch 1, bei dem die Kennung aufgrund einer Eingabe von in der Kennung enthaltenen Zeichen an dem Kommunikationsendgerät (101) oder aufgrund einer Auswahl einer in dem Kommunikationsendgerät (101) gespeicherten Kennung erhalten wird.

3. Verfahren nach Anspruch 1, bei dem aufgrund des Empfangs der Kennung in der Erfassungseinrichtung (202) eine Abfrage des Attributs über eine Benutzerschnittstelle (105) des Kommunikationsendgeräts (101) erfolgt.

4. Verfahren nach einem der vorangegangenen Ansprüche, bei dem der Aufbau der Kommunikationsverbindung ermöglicht wird, ohne die Kennung zu speichern, wenn die Kennung zuvor bereits in dem Adressbuch (201) gespeichert war.

5. Verfahren nach einem der vorangegangenen Ansprüche, wobei das Kommunikationsendgerät (101) als ein mobiles Endgerät ausgestaltet ist und die Erfassungseinrichtung (202) Bestandteil einer SIM-Karte (109) des Endgeräts (101) ist.

6. Verfahren nach einem der vorangegangenen Ansprüche, bei dem die angegebene Kennung aufgrund eines in dem Kommunikationsendgerät (101) aktivierten Dienstes an die SIM-Karte (109) übermittelt wird, wobei durch den Dienst Verbindungsdetails einer mittels des Kommunikationsendgeräts aufzubauenden Kommunikationsverbindung an die SIM-Karte übermittelt werden.

7. Verfahren nach Anspruch 6, wobei es sich bei dem Dienst um eine Call-Control-Funktion eines SIM Application Toolkit, USIM Application Toolkit oder anderen Card Application Toolkit handelt.

8. Verfahren nach einem der Ansprüche 5 bis 7, wobei das vorgegebene Adressbuch (201) in der SIM-Karte (109) gespeichert ist.

9. Verfahren nach einem der vorangegangenen Ansprüche, wobei es sich bei der Kennung um eine Rufnummer eines Teilnehmers handelt.

10. Verfahren nach einem der vorangegangenen Ansprüche, wobei die Kommunikationsverbindung eine Sprachverbindung zu dem Kommunikationsendgerät (101) des Teilnehmers und/oder die Übermittlung einer Nachricht an das Kommunikationsendgerät (101) des Teilnehmers umfasst.

11. Kommunikationsendgerät (101), in dem eine Kennung eines Kommunikationsteilnehmers erhalten werden kann, um eine Kommunikationsverbindung aufzubauen, umfassend
- eine Erfassungseinrichtung (202), die dazu ausgestaltet ist, die Kennung zu empfangen, zu prüfen, ob die Kennung in einem vorgegebenen Adressbuch (201) des Kommunikationsendgeräts (101) gespeichert ist, und die Kennung in dem Adressbuch (201) zu speichern, wenn festgestellt wird, dass die Kennung zuvor nicht in dem Adressbuch (201) gespeichert war,
die Erfassungseinrichtung (202) dazu ausgestaltet ist zu prüfen, ob in dem Kommunikationsendgerät ein weiteres Adressbuch vorhanden ist, in dem die Kennung gespeichert ist,
die Erfassungseinrichtung (202) dazu ausgestaltet ist zu prüfen, ob der Kennung in dem weiteren Adressbuch Attribute zugeordnet sind,
die Erfassungseinrichtung (202) dazu ausgestaltet ist, die Attribute in dem Adressbuch (201) zu speichern, so dass die Attribute der Kennung zugeordnet sind, und
die ferner dazu ausgestaltet ist, den Aufbau der Kommunikationsverbindung nach dem Empfang der Kennung zu ermöglichen.

12. Kommunikationsendgerät (101) nach Anspruch 11, bei dem die Erfassungseinrichtung (202) eine Anwendung ist, die in einer SIM-Karte (109) des Kommunikationsendgeräts (101) ausgeführt wird.

13. SIM-Karte (109) zur Verwendung in einem Kommunikationsendgerät (101), in dem eine Kennung eines Kommunikationsteilnehmers erhalten werden kann, um eine Kommunikationsverbindung aufzubauen, umfassend
eine Erfassungseinrichtung (202), die dazu ausgestaltet ist, die Kennung zu empfangen, zu prüfen, ob die Kennung in einem vorgegebenen Adressbuch (201) des Kommunikationsendgeräts (101) gespeichert ist, und die Kennung in dem Adressbuch (201) zu speichern, wenn festgestellt wird, dass die Kennung zuvor nicht in dem Adressbuch (201) gespeichert war,
die Erfassungseinrichtung (202) dazu ausgestaltet ist zu prüfen, ob in dem Kommunikationsendgerät ein weiteres Adressbuch vorhanden ist, in dem die Kennung gespeichert ist,
die Erfassungseinrichtung (202) dazu ausgestaltet ist zu prüfen, ob der Kennung in dem weiteren Adressbuch Attribute zugeordnet sind,
die Erfassungseinrichtung (202) dazu ausgestaltet ist, die Attribute in dem Adressbuch (201) zu speichern, so dass die Attribute der Kennung zugeordnet sind, und
die ferner dazu ausgestaltet ist, den Aufbau der Kommunikationsverbindung nach dem Empfang der Kennung zu ermöglichen.

14. SIM-Karte (109) nach Anspruch 13, bei der die Erfassungseinrichtung (202) eine Anwendung ist, die in der SIM-Karte (109) ausgeführt wird.

## Claims

1. A method for the acquisition of an identifier of a communication subscriber in a communication terminal device (101) comprising the following steps:
• obtaining the identifier in order to establish a communication connection on the basis of the identifier;
• receiving the identifier in an acquisition means (202) of the communication terminal device (101);
• checking in the acquisition means (202) whether the identifier is contained in a prescribed address book (201) of the communication terminal device (101);
• storing the identifier in the address book (201) if it is ascertained that the identifier was not previously contained in the address book (201);
• checking in the acquisition means (202) whether an additional address book in which the identifier is stored is present in the communication terminal device;
• checking in the acquisition means (202) whether attributes are associated with the identifier in the additional address book;
• storing the attributes in the address book (201) so that the attributes are associated with the identifier; and
• making the establishment of the communication connection possible.

2. The method according to claim 1, wherein the identifier is obtained on the basis of entering characters contained in the identifier on the communication terminal device (101) or on the basis of selecting an identifier stored in the communication terminal device (101).

3. The method according to claim 1, wherein, on the basis of the receipt of the identifier in the acquisition means (202), a query of the attribute is made via a user interface (105) of the communication terminal device (101).

4. The method according to one of the preceding claims, wherein the establishment of the communication connection is made possible without storing the identifier if the identifier had already been previously stored in the address book (201).

5. The method according to one of the preceding claims, whereby the communication terminal device (101) is configured as a mobile terminal device, and the acquisition means (202) is a component of a SIM card (109) of the terminal device (101).

6. The method according to one of the preceding claims, wherein the indicated identifier is transmitted to the SIM card (109) on the basis of a service that is activated in the communication terminal device (101), whereby connection details of a communication connection that is to be established by means of the communication terminal device are transmitted to the SIM card by the service.

7. The method according to claim 6, whereby the service is a call-control function of a SIM Application Toolkit, a USIM Application Toolkit or another Card Application Toolkit.

8. The method according to one of claims 5 to 7, whereby the prescribed address book (201) is stored in the SIM card (109).

9. The method according to one of the preceding claims, whereby the identifier is a phone number of a subscriber.

10. The method according to one of the preceding claims, whereby the communication connection comprises a voice connection to the communication terminal device (101) of the subscriber and/or the transmission of a message to the communication terminal device (101) of the subscriber.

11. A communication terminal device (101) wherein an identifier of a communication subscriber can be obtained in order to establish a communication connection, comprising
• an acquisition means (202) that is configured to receive the identifier, to check whether the identifier is stored in a prescribed address book (201) of the communication terminal device (101), and to store the identifier in the address book (201) if it is ascertained that the identifier had not been previously stored in the address book (201);
• the acquisition means (202) is configured to check whether an additional address book in which the identifier is stored is present in the communication terminal device;
• the acquisition means (202) is configured to check whether attributes are associated with the identifier in the additional address book;
• the acquisition means (202) is configured to store the attributes in the address book (201) so that the attributes are associated with the identifier; and
• it is also configured to make the establishment of the communication connection possible after the receipt of the identifier.

12. The communication terminal device (101) according to claim 11, wherein the acquisition means (202) is an application that is executed in a SIM card (109) of the communication terminal device (101).

13. A SIM card (109) for use in a communication terminal device (101) wherein an identifier of a communication subscriber can be obtained in order to establish a communication connection, comprising
• an acquisition means (202) that is configured to receive the identifier, to check whether the identifier is stored in a prescribed address book (201) of the communication terminal device (101), and to store the identifier in the address book (201) if it is ascertained that the identifier had not been previously stored in the address book (201);
• the acquisition means (202) is configured to check whether an additional address book in which the identifier is stored is present in the communication terminal device;
• the acquisition means (202) is configured to check whether attributes are associated with the identifier in the additional address book;
• the acquisition means (202) is configured to store the attributes in the address book (201) so that the attributes are associated with the identifier; and
• it is also configured to make the establishment of the communication connection possible after the receipt of the identifier.

14. The SIM card according to claim 13, wherein the acquisition means (202) is an application that is executed in the SIM card (109).

## Revendications

1. Procédé de détection d'un identifiant d'un participant à une communication dans un terminal de communication (101), comportant les étapes suivantes :
- obtenir l'identifiant pour établir une liaison de communication à l'aide de l'identifiant ;
- recevoir l'identifiant dans un dispositif de détection (202) du terminal de communication (101) ;
- contrôler, dans le dispositif de détection (202), si l'identifiant est contenu dans un carnet d'adresses (201) du terminal de communication (101) ;
- sauvegarder l'identifiant dans le carnet d'adresses (201) s'il est constaté que l'identifiant n'était pas préalablement contenu dans le carnet d'adresses (201) ;
- contrôler, dans le dispositif de détection (202), s'il y a dans le terminal de communication un autre carnet d'adresses dans lequel l'identifiant est stocké ;
- contrôler, dans le dispositif de détection (202), si des attributs sont associés à l'identifiant dans l'autre carnet d'adresses ;
- enregistrer les attributs dans le carnet d'adresses (201), de sorte que les attributs sont associés à l'identifiant et
- permettre l'établissement de la liaison de communication.

2. Procédé selon la revendication 1, selon lequel l'identifiant est obtenu sur la base d'une saisie de caractères contenus dans l'identifiant au niveau du terminal de communication (101) ou sur la base d'une sélection d'un identifiant stocké dans le terminal de communication (101).

3. Procédé selon la revendication 1, selon lequel a lieu, sur la base de la réception de l'identifiant dans le dispositif de détection (202), une consultation de l'attribut via une interface utilisateur (105) du terminal de communication (101).

4. Procédé selon l'une des revendications précédentes, selon lequel l'établissement de la liaison de communication est rendu possible sans sauvegarder l'identifiant si l'identifiant était déjà préalablement stocké dans le carnet d'adresses (201).

5. Procédé selon l'une des revendications précédentes, le terminal de communication (101) étant conçu comme terminal mobile et le dispositif de détection (202) faisant partie intégrante d'une carte SIM (109) du terminal (101).

6. Procédé selon l'une des revendications précédentes, selon lequel l'identifiant indiqué est transmis à la carte SIM (109) sur la base d'un service activé dans le terminal de communication (101), des détails d'une liaison de communication à établir au moyen du terminal de communication étant transmis par le service à la carte SIM.

7. Procédé selon la revendication 6, selon lequel le service est une fonction de contrôle d'appel d'une boîte à outils d'application SIM, d'une boîte à outils d'application USIM ou d'une autre boîte à outils d'application de carte.

8. Procédé selon l'une des revendications 5 à 7, le carnet d'adresses donné (201) étant stocké sur la carte SIM (109).

9. Procédé selon l'une des revendications précédentes, l'identifiant étant un numéro d'appel d'un abonné.

10. Procédé selon l'une des revendications précédentes, la liaison de communication comprenant une liaison vocale vers le terminal de communication (101) de l'abonné et/ou la transmission d'un message au terminal de communication (101) de l'abonné.

11. Terminal de communication (101) dans lequel il est possible d'obtenir un identifiant d'un abonné de communication pour établir une liaison de communication, comprenant
un dispositif de détection (202) conçu pour recevoir l'identifiant, pour contrôler si l'identifiant est stocké dans un carnet d'adresses donné (201) du terminal de communication (101) et pour sauvegarder l'identifiant dans le carnet d'adresses (201) s'il est constaté que l'identifiant n'était pas préalablement stocké dans le carnet d'adresses (201),
le dispositif de détection (202) étant conçu pour contrôler s'il y a, dans le terminal de communication, un autre carnet d'adresses dans lequel l'identifiant est stocké ;
le dispositif de détection (202) étant conçu pour contrôler si des attributs sont associés à l'identifiant dans l'autre carnet d'adresses ;
le dispositif de détection (202) étant conçu pour sauvegarder les attributs dans le carnet d'adresses (201), de sorte que les attributs sont associés à l'identifiant,
et étant en outre conçu pour permettre l'établissement de la liaison de communication après la réception de l'identifiant.

12. Terminal de communication (101) selon la revendication 11, selon lequel le dispositif de détection (202) est une application qui est exécutée sur une carte SIM (109) du terminal de communication (101).

13. Carte SIM (109) destinée à être utilisée dans un terminal de communication (101), dans lequel il est possible d'obtenir un identifiant d'un abonné de communication pour établir une liaison de communication, comprenant
un dispositif de détection (202) qui est conçu pour recevoir l'identifiant, pour contrôler si l'identifiant est stocké dans un carnet d'adresses donné (201) du terminal de communication (101) et pour sauvegarder l'identifiant dans le carnet d'adresses (201) s'il est constaté que l'identifiant n'était pas préalablement stocké dans le carnet d'adresses (201),
le dispositif de détection (202) étant conçu pour contrôler s'il y a, dans le terminal de communication, un autre carnet d'adresses dans lequel l'identifiant est stocké ;
le dispositif de détection (202) étant conçu pour contrôler si des attributs sont associés à l'identifiant dans l'autre carnet d'adresses ;
le dispositif de détection (202) étant conçu pour sauvegarder les attributs dans le carnet d'adresses (201), de sorte que les attributs sont associés à l'identifiant,
et étant en outre conçu pour permettre l'établissement de la liaison de communication après la réception de l'identifiant.

14. Carte SIM (109) selon la revendication 13, dans laquelle le dispositif de détection (202) est une application qui est exécutée sur la carte SIM (109).
